# EUROPÄISCHE PATENTSCHRIFT

(11) **EP 1 496 516 B1**
(45) Veröffentlichungstag und Bekanntmachung des Hinweises auf die Patenterteilung: **27.09.2006**
(21) Anmeldenummer: 03015888.5
(22) Anmeldetag: 11.07.2003
(51) Int. Cl.: G03B 31/02, G11B 23/30, G11B 23/34, G11B 23/38

(54) **Kennzeichnung eines Trägermaterials für zur Wiedergabe bestimmte Informationen**
Identification of an information reproducing carrier
Identification de support de reproduction d'informations

(43) Veröffentlichungstag der Anmeldung: 12.01.2005
(73) Patentinhaber: Lehmann, Gerhard, 12359 Berlin (DE)
(72) Erfinder: Lehmann, Gerhard, 12359 Berlin (DE)
(74) Vertreter: Röthinger, Rainer

(56) Entgegenhaltungen:
- EP-A- 0 741 382
- EP-A- 0 785 547
- EP-A- 0 802 527
- WO-A-01/35163
- WO-A-85/02293
- WO-A-94/24665
- WO-A-99/13470
- DE-A- 3 707 608
- US-A- 5 398 231
- US-A- 5 400 319
- US-A- 5 607 188
- US-B1- 6 259 575

## Beschreibung

### Gebiet der Erfindung

Die Erfindung betrifft maschinell auslesbare Filmträgermaterialien. Genauer gesagt betrifft die Erfindung die Individualisierung derartiger Trägermaterialien.

### Hintergrund der Erfindung

Mechanismen zur Wiedergabe von Informationen stehen im Mittelpunkt vieler technischer Gebiete. Üblicherweise sind die zur Wiedergabe bestimmten Informationen auf einem körperlichen Träger enthalten, der mittels geeigneter Vorrichtungen ausgelesen wird. Anschließend werden die ausgelesenen Informationen optisch, akustisch, kombiniert optisch und akustisch oder auf sonstige wahrnehmbare Weise wiedergegeben.

Verschiedene Gegebenheiten im Zusammenhang mit der Handhabung des Trägers lassen dessen Kennzeichnung wünschenswert erscheinen. So besteht bei der Produktion der Träger häufig das Erfordernis, die Träger mit einer individualisierenden Kennzeichnung wie beispielsweise einer fortlaufenden Seriennummer oder einer Chargenbezeichnung zu versehen. Eine derartige Kennzeichnung erleichtert das nachträgliche Ermitteln von Produktionsstätten, Produktionsparametern, Vertriebswegen, usw.

In der Regel erfolgt das Kennzeichnen des Trägers dadurch, dass beispielsweise eine Seriennummer mittels geeigneter Druck- oder Graviertechniken auf einer Oberfläche des Trägers aufgebracht wird. Um die Wiedergabe der Informationen nicht zu beeinträchtigen, wird darauf geachtet, dass die Kennzeichnung beabstandet von denjenigen Bereichen des Trägers angebracht wird, welche die zur Wiedergabe bestimmten Informationen beinhalten.

In der Praxis hat sich herausgestellt, dass herkömmliche Kennzeichnungen häufig absichtlich und unbeabsichtigt manipuliert werden.

Aus der EP 0 802 527 A1 ist eine optische Disc bekannt, die einen ersten Aufzeichnungsbereich für sogenannte Hauptdaten und einen zweiten Aufzeichnungsbereich für Hilfsdaten besitzt. Im Aufzeichnungsbereich für Hilfsdaten werden Markierungen in Form von Burst Cutting Area-(BCA) Streifen ausgebildet.

Aus der US 6,259,575 B1 ist ein Informationsträger mit Datenspuren und davon beabstandeten Nutzspuren bekannt. Im Bereich der Nutzspuren kann der Datenträger unter Verwendung eines sich wiederholenden Bitmusters codiert sein.

Die WO 94/24665 A lehrt einen plattenförmigen optischen Träger für maschinell auslesbare Informationen. Im Bereich der maschinell auslesbaren Informationen ist eine visuell wahrnehmbare Beschriftung ausgebildet.

Aus der US 5,400,319 A ist ein scheibenförmiger Informationsträger bekannt. Der Informationsträger besitzt einen ersten Aufzeichnungsbereich für Daten und einen zweiten Bereich, in dem eine maschinenlesbare Abfolge von Strichen ausgebildet ist.

Aus der DE 37 07 608 A1 ist ein kombiniertes Ton-/Bildkodierverfahren bekannt. Zur Kodierung im Ton wird wenigstens ein schmalbandiger Frequenzbereich ausgefiltert, um eine Fehlstelle im Frequenzband zu erzeugen. Die Position der Fehlstelle sowie deren Positionsänderung stellen einen Identitätscode für einen Film oder eine Filmkopie dar. Zur Bildkodierung werden in einer Kopiermaschine Kodierzeichen auf eine Filmkopie (Original) aufbelichtet. Dadurch wird es möglich, jeder Film-Kopie einen anderen Code (beispielsweise eine fortlaufende Nummerierung) zu geben.

In der WO 01/35163 A1 wird ein Verfahren beschrieben, bei dem ein maschinenlesbarer Barcode zwischen den Perforationen und dem Rand eines Filmstreifens angeordnet wird.

In der WO 85/02293 A1 wird ein Verfahren erläutert, bei dem ein Markierungssignal auf ein Tonsignal aufmoduliert und das so erhaltene Tonsignal auf einer Tonspur aufgezeichnet wird.

Der Erfindung liegt die Aufgabe zugrunde, einen verbesserten Ansatz zum Kennzeichnen eines maschinell auslesbaren FilmTrägers anzugeben, der zur Wiedergabe bestimmte Informationen beinhaltet.

### Zusammenfassung der Erfindung

Diese Aufgabe wird erfindungsgemäß gelöst durch ein Verfahren nach Anspruch 1, und durch ein Filmträger nach Anspruch 10.

Diese Vorhergehensweise ermöglicht es, die zur Kennzeichnung des Trägers vorgesehenen Markierungen mit den zur Wiedergabe bestimmten Informationen in eindeutiger Weise zu koppeln. Die Koppelung kann eine den Träger lndividualisiereride Änderung der zur Wiedergabe bestimmten Informationen zur Folge haben, so dass auch die Wiedergabe der Informationen in einer den Träger individualisierenden Weise geändert ist.

Das Ausbilden der Markierungen auf dem Träger kann gleichzeitig mit dem Aufbringen der zur Wiedergabe bestimmten Informationen erfolgen. In diesem Fall können die Markierungen also bereits in den zur Wiedergabe bestimmten Informationen enthalten sein. Möglich ist jedoch auch, die Markierungen zeitlich getrennt von dem Aufbringen der zur Wiedergabe bestimmten Informationen auf dem Träger auszubilden. Dies bedeutet, dass die Markierungen bereits vor oder erst nach dem Aufbringen der zur Wiedergabe bestimmten Informationen auf dem Träger ausgebildet werden.

Die Markierungen können durch mechanisches Einwirken auf den Träger oder berührungslos ausgebildet werden. Das berührungslose Ausbilden der Markierungen ist beispielsweise mittels eines Lasers möglich.

Gemäß einem weiteren Aspekt der vorliegenden Erfindung wird ein maschinell auslesbarer Träger für Informationen, die in einer kontinuierlichen Abfolge auf dem Träger enthalten und zur Wiedergabe bestimmt sind, zur Verfügung gestellt. Im Bereich der zur Wiedergabe bestimmten Informationen ist eine den Träger individualisierende Abfolge von Markierungen ausgebildet, die zusammen mit den zur Wiedergabe bestimmten Informationen auslesbar ist.

Das Auslesen der zur Wiedergabe bestimmten Informationen mit den dazugehörigen Markierungen kann mittels herkömmlicher Vorrichtungen erfolgen.

Wie bereits erläutert, werden die Markierungen in einer den Träger individualisierenden Abfolge im Bereich der zur Wiedergabe bestimmten Information ausgebildet. Dies bedeutet, dass die Abfolge von Markierungen einen den Träger kennzeichnende Funktion besitzt. Die Markierungen sind vorzugsweise einzeln oder in ihrer Gesamtheit nicht unmittelbar lesbar. Um dieses Erfordernis zu erfüllen, kann die Abfolge von Markierungen einen Identifizierungs-Code darstellen. Bei dem Identifizierungs-Code kann es sich um einen binären Code oder um einen Barcode handeln.

Bei einem binären Code werden in einer Abfolge von Markierungen gezielt einzelne Markierungen ausgebildet bzw. nicht ausgebildet. Der binäre Code ist daher durch das Vorhandensein bzw. das Fehlen einzelner Markierungen bestimmt. Bei einem Barcode (auch Balken- oder Strichcode genannt) handelt es sich um eine Abfolge von Markierungen unterschiedlicher Stärke, d.h. unterschiedlicher räumlicher Ausdehnung. Andere Codierungsarten, die mit Hilfe einer Abfolge von Markierungen implementierbar sind, können ebenfalls zum Kennzeichnen des Trägers verwendet werden.

Die Markierungen können derart auf dem Träger ausgebildet sein, dass die Wahrnehmung der wiedergegebenen Informationen seitens eines Publikums nicht oder nur kaum gestört ist. Es kann daher erforderlich sein, zum Erfassen der in den zur Wiedergabe bestimmten Informationen enthaltenen Markierungen spezielle Erfassungstechniken anzuwenden. Derartige Erfassungstechniken laufen in der Regel vollautomatisiert ab.

Um die sinnliche Wahrnehmung der wiedergegebenen Informationen nicht oder nur unmerklich zu beeinträchtigen, sollte eine einzelne der Markierungen die wiedergegebenen Informationen weniger als 250 ms und insbesondere weniger als 100 ms beeinflussen. Von einer nicht oder nur kaum wahrnehmbaren Beeinflussung der wiedergegebenen Informationen kann in Abhängigkeit von einer Auslesegeschwindigkeit der zur Wiedergabe bestimmten Informationen in der Regel dann gesprochen werden, wenn eine einzelne der Markierungen senkrecht zu einer Ausleserichtung eine Ausdehnung von weniger als ungefähr 500 µm und insbesondere von weniger als ungefähr 200 µm besitzt.

Die den Träger individualisierende Abfolge von Markierungen kann lediglich ein einziges Mal auf dem Träger ausgebildet sein. Es kann jedoch auch daran gedacht werden, die Abfolge von Markierungen mehrfach und räumlich versetzt auf dem Träger auszubilden. Dies erleichtert deren Auffindung.

Die Erfindung beinhaltet weiterhin einen gekennzeichneten Träger, der zur Wiedergabe bestimmte Informationen enthält und durch Kopieren des vorstehend erläuterten Trägers (des "Ur-Träger") erhalten wurde. Die zur Wiedergabe bestimmten Informationen (einschließlich der den Ur-Träger individualisierenden Abfolge von Markierungen) können auf dem durch Kopieren des Ur-Trägers erhaltenen Träger in einem geänderten Format enthalten sein. Insbesondere müssen die zur Wiedergabe bestimmten Informationen auf der Kopie nicht mehr in einer kontinuierlichen Abfolge enthalten sein. Außerdem wäre es denkbar, dass das Kopieren Formatierungsmechanismen wie beispielsweise eine Analog/Digital-Wandlung umfasst. Während die zur Wiedergabe bestimmten Informationen auf dem Ur-Träger beispielsweise in einem analogen Format vorliegen können, können sie auf dem durch Kopieren des Ur-Trägers erhaltenen Träger (z.B. einer CD, einer CD-ROM, einer DVD oder einer DVD-ROM) in digitaler Form abgespeichert sein.

Gemäß einem weiteren Aspekt der Erfindung wird ein Verfahren zum Identifizieren eines Ur-Trägers, insbesondere des einer Kopie zugrunde liegenden Ur-Trägers, zur Verfügung gestellt. Das Verfahren enthält die Schritte des maschinellen Auslesens der auf dem zur Verfügung stehenden Träger dem Ur-Träger oder der Kopie) enthaltenen und zur Wiedergabe bestimmten Informationen in einem mit den Markierungen versehenen Bereich, des Auswertens der ausgelesenen Informationen zum Ermitteln der Abfolge von Markierungen sowie des Identifizierens des Ur-Trägers auf der Grundlage der ermittelten Abfolge von Markierungen.

Das Auswerten der ausgelesenen Informationen kann eine Wiedergabe der ausgelesenen Informationen und eine Analyse der wiedergegebenen Informationen umfassen. Dies bedeutet, dass die Abfolge von Markierungen nicht unmittelbar auf der Grundlage der ausgelesenen Informationen sondern anhand der beispielsweise akustisch oder optisch wiedergegebenen Informationen bestimmt werden kann. Zum Ermitteln der Abfolge der Markierungen in den ausgelesenen oder wiedergegebenen Informationen kann eine Bild- und/oder Spektral-Analyse verwendet werden. Weiterhin können Mechanismen wie eine Bild- und/oder Tonfilterung zum Einsatz gelangen.

Das Ermitteln der Abfolge von Markierungen kann auf der Grundlage von Referenz-Informationen erfolgen. Sofern nicht markierte Referenz-Informationen Zur Verfügung stehen, ist eine Identifizierung der einzelnen Markierungen auf der Grundlage eines Vergleichs der vom Träger ausgelesenen und zur Wiedergabe bestimmten oder bereits wiedergegebenen Informationen mit diesen Referehz-Informationen möglich.

### Kurze Beschreibung der Zeichnungen

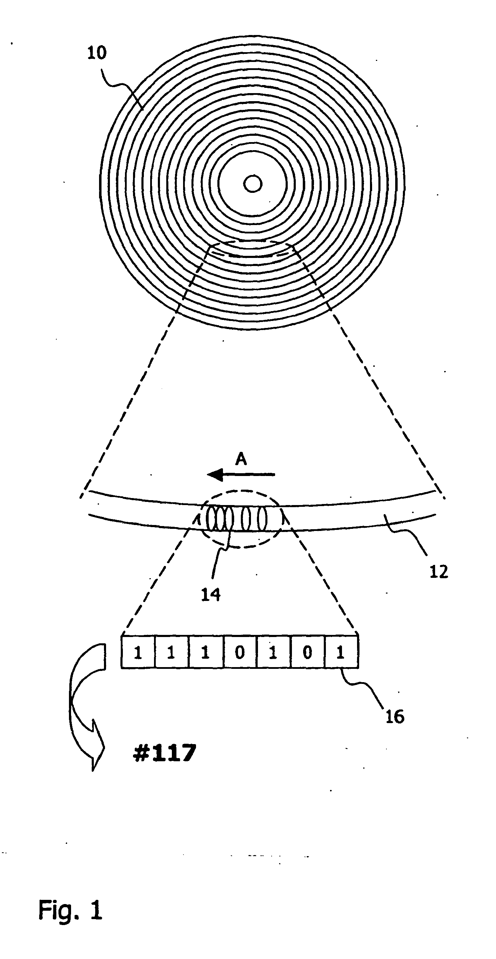

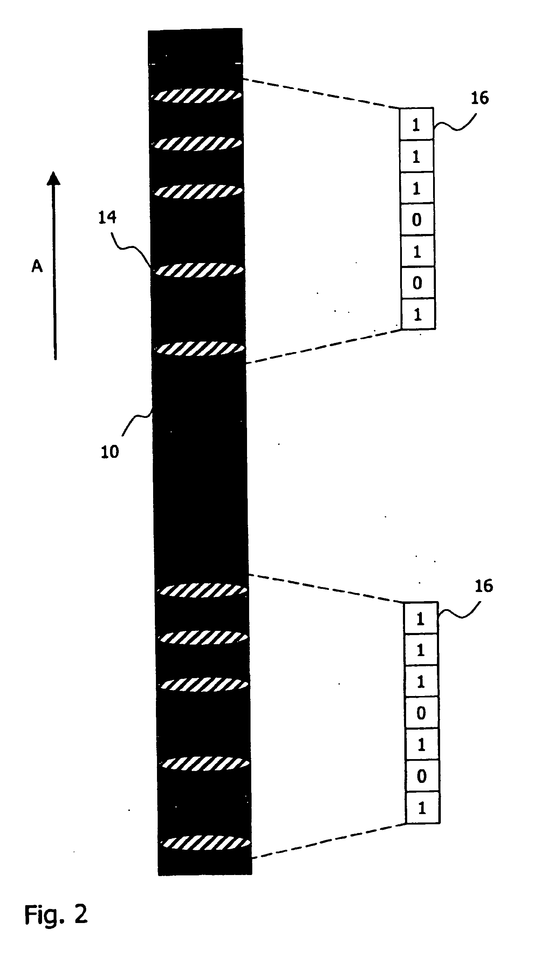

Weitere Vorteile und Einzelheiten der Erfindung ergeben sich aus der nachfolgenden Beschreibung bevorzugter Ausführungsbeispiele und aus den Figuren. Es zeigt:
Bei Figuren 1 und 2 handelt es sich um Beispiele, die das Verständnis der Erfindung erleichtern.
Fig. 1 ein erstes Ausführungsbeispiel eines Trägers in Gestalt einer Schallplatte;
Fig. 2 ein zweites Ausführungsbeispiel eines Trägers in Gestalt eines Magnetbandes;
Fig. 3a ein erstes Ausführungsbeispiel eines erfindungsgemäßen Trägers in Gestalt eines Zelluloid-Films;
Fig. 3b eine Abwandlung des erstes Ausführungsbeispiels gemäß Fig.3a; und
Fig.4 ein gemessenes Diagramm zur Ermittlung der in wiedergegebenen Toninformationen enthaltenen Abfolge von Markierungen.

### Beschreibung bevorzugter Ausführungsformen

Fig. 1 zeigt einen ersten Träger für analoge Toninformationen in Gestalt einer Schallplatte 10. Die Toninformationen sind bei der Schallplatte 10 in einer kontinuierlichen Abfolge (z.B. als Lied) und logisch aufeinanderfolgend im Bereich einer spiralförmigen Rille enthalten. Genauer gesagt sind die Toninformationen durch die strukturellen Eigenschaften (Erhebungen/Vertiefungen) der Rille festgelegt.

In Fig. 1 ist ein Abschnitt der spiralförmigen Rille 12 vergrößert dargestellt. Der Deutlichkeit halber sind die Toninformationen, d.h. die im Bereich der Rille 12 ausgebildeten Erhebungen und Vertiefungen, nicht eingezeichnet. Eingezeichnet ist jedoch eine Abfolge von Markierungen 14, die in der Rille 12 und damit im Bereich der Toninformationen ausgebildet ist. Die Markierungen 14 sind im Größenverhältnis zur Rille 12 nicht maßstabsgerecht dargestellt. Tatsächlich werden die Markierungen 14 derart ausgebildet, dass die Wiedergabe der Toninformationen beim Abspielen der Schallplatte 10 auf einem Plattenspieler für einen Hörer kaum wahrnehmbar beeinflusst wird. Um beispielsweise den Musikgenuss nicht zu beeinträchtigen, können die Markierungen 14 in einem leisen Übergangsabschnitt zwischen zwei aufeinanderfolgenden Titeln ausgebildet werden. Sollen die Markierungen hingegen akustisch weitgehend verborgen werden, kann daran gedacht werden, die Markierungen 14 innerhalb eines Titels vorzusehen.

Wie sich aus Fig. 1 ergibt, kann die Abfolge von Markierungen 14 als ein binärer Code 16 aufgefasst werden. In Bezug auf eine durch den Pfeil A gekennzeichnete Ausleserichtung bilden die Markierungen 14 im Beispielfall von Fig. 1 die binäre Zahl 1 1 1 0 1 0 1. Diese binäre Zahl entspricht der Dezimalzahl 117. Mit anderen Worten, der Schallplatte 10 ist die Kennzeichnung 117 zugeordnet. Bei dieser Kennzeichnung kann es sich beispielsweise um eine Seriennummer oder eine Chargenbezeichnung handeln.

Die Markierungen 14 sind berührungslos mittels eines Lasers ausgebildet worden. Das Ausbilden der Markierungen 14 erfolgte nach dem Pressen der Schallplatte 10. Es wäre jedoch auch möglich, die Markierungen 14 beim Pressen der Schallplatte 10 und damit gleichzeitig mit den Toninformationen auszubilden.

Wie sich aus Fig. 1 ergibt, erstrecken sich die einzelnen Markierungen 14 im Wesentlichen senkrecht zur Ausleserichtung A. Die Breite einer einzelnen der Markierungen senkrecht zur Ausleserichtung A beträgt weniger als ungefähr 50 µm.

Bei der Wiedergabe der auf der Schallplatte 10 enthaltenen Toninformationen werden diese in einer die Schallplatte 10 individualisierenden Weise geändert, wenn die Nadel des Plattenspielers die Abfolge von Markierungen 14 abtastet, d.h. ausliest.

In Fig. 2 ist ein zweites Ausführungsbeispiel eines Trägers in Gestalt eines Magnetbandes 10 ausschnittsweise dargestellt. Auf dem Magnetband 10 sind analoge oder digitale Ton- und/oder Bildinformationen aufgezeichnet. Diese zur Wiedergabe bestimmten Informationen sind in einer kontinuierlichen Abfolge entlang der durch den Pfeil A gekennzeichneten Ausleserichtung auf dem Magnetband 10 enthalten.

Wie Fig. 2 entnommen werden kann, ist im Bereich der zur Wiedergabe bestimmten Informationen eine sich zweimal wiederholende Abfolge von Markierungen 14 ausgebildet. Die Markierungen 14 wurden durch lokale Änderung der magnetischen Eigenschaften des Magnetbands 10 erhalten und nach dem Aufzeichnen der zur Wiedergabe bestimmten Informationen ausgebildet. Der Deutlichkeit halber sind die einzelnen Markierungen 14 in Fig. 2 als schraffierte Ellipsen dargestellt. In Wirklichkeit sind die Markierungen 14 visuell nicht erfassbar.

Wie bereits im Zusammenhang mit Fig. 1 erläutert, repräsentiert die Abfolge von Markierungen 14 einen binären Code 16. Genauer gesagt steht die Abfolge von Markierungen 14 für die binäre Zahl 1 1 1 0 1 0 1 (Dezimal 117). Die Abfolge von Markierungen 14 ist daher geeignet, das Magnetband 10 in individualisierender Weise zu kennzeichnen.

Die Abfolge von Markierungen 14 wird beim Abspielen des Magnetbands 10 zusammen mit den zur Wiedergabe bestimmten Informationen ausgelesen und macht sich in einer das Magnetband 10 individualisierenden Weise bei der Wiedergabe der Informationen bemerkbar. Die geometrischen Dimensionen der Markierungen 14 sowie die Stärke der Änderung der magnetischen Eigenschaften im Bereich der Markierungen 14 sind derart gewählt, dass die Wahrnehmung der wiedergegebenen Informationen seitens des Publikums nicht oder nur unwesentlich beeinflusst ist.

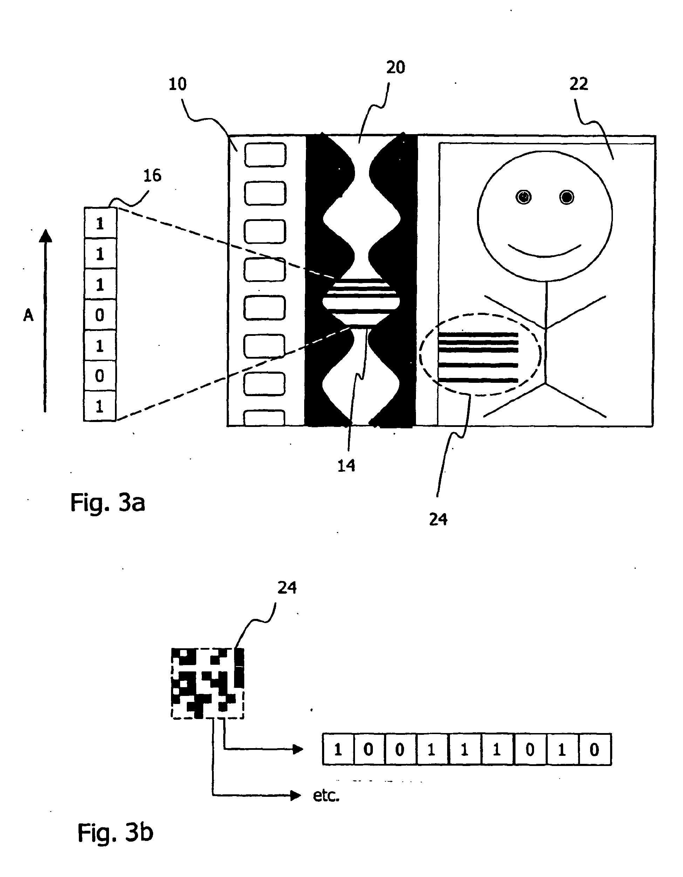

In Fig. 3a ist ein erstes Ausführungsbeispiel eines erfindungsgemäßen Trägers in Gestalt eines mit analogen Ton- und Bildinformationen versehenen, bandförmigen Zelluoid-Films 10 zur Wiedergabe mittels eines Filmprojektors dargestellt. Die Toninformationen sind in einer kontinuierlichen Abfolge als Lichttonspur 20 ausgebildet. Die Bildinformationen sind ebenfalls in einer kontinuierlichen Abfolge z.B. als Kinofilm) in einem der Lichttonspur 20 benachbarten Abschnitt 22 enthalten.

In Fig. 3a ist deutlich zu erkennen, dass im Bereich der Lichttonspur 20 eine Abfolge von parallelen, strichförmigen Markierungen 14 ausgebildet ist. Hinsichtlich einer Ausleserichtung A kann die Abfolge von Markierungen 14 als binärer Code und genauer gesagt als die binäre Zahl 1 1 1 0 1 0 1 (Dezimal 117) aufgefasst werden. Die im Bereich der Lichttonspur 20 beispielsweise nachträglich mittels eines Lasers ausgebildeten Markierungen 14 können als eine Änderung der optischen Eigenschaften des Zelluoid-Films aufgefasst werden. Beim optischen Auslesen der Lichttonspur 20 und bei der anschließenden Wiedergabe des ausgelesenen Tons machen sich die in den ausgelesenen Toninformationen enthaltenen Markierungen 14 daher in einer den Zelluoid-Film 10 individualisierenden Weise bemerkbar.

Die im Bereich der Uchttonspur 20 ausgebildeten Markierungen besitzen eine Ausdehnung senkrecht zur Ausleserichtung A von typischerweise 50 bis 250 µm. Um einerseits eine hohe Erkennungswahrscheinlichkeit zu gewährleisten und andererseits die Tonwiedergabe nicht merklich zu beeinflussen, hat sich eine Markierungsbreite von ungefähr 80 bis 120 µm als besonders zweckmäßig erwiesen.

Zusätzlich hierzu können derartige Markierungen auch in einem Abschnitt 24 des Bildbereichs 22 ausgebildet werden. Die Markierungen 14 können in einem einzelnen Bild oder in einer Abfolge mehrerer Bilder enthalten sein. Durch die Markierungen werden die optischen Eigenschaften des Zelluoid-Films im Abschnitt 24 des Bildbereichs 22 geändert. Beim (optischen) Auslesen der Bildinformationen wird daher gleichzeitig die Abfolge von Markierungen im Abschnitt 24 ausgelesen.

Die im Abschnitt 24 des Bildbereichs 22 ausgebildeten Markierungen können, wie in Fig. 3a gezeigt, eine Strichfolge sein. Wie in Fig. 3b dargestellt, kann die Abfolge der Markierungen jedoch auch ein Code-Muster sein. Ein derartiges Code-Muster hat den Vorteil, dass es in den wiedergegebenen Bildinformationen weniger störend wirkt. Außerdem gestattet das in Fig. 3b dargestellte Code-Muster eine stärkere Individualisierung, da von dem Code-Muster eine höhere Anzahl einzelner Codes zur Verfügung gestellt wird.

Das in Fig. 3b beispielhaft dargestellte Code-Muster besteht aus einzelnen Code-Spalten oder -Zeilen, die jeweils einem binären Code entsprechen. So entspricht die dritte Code-Spalte von rechts des Code-Musters der binären Zahl 1 0 0 1 1 1 0 1 0 usw.

Die einzelnen Markierungen können derart auf dem Träger ausgebildet sein, dass sie sequentiell in den wiedergegebenen Informationen auftreten. Dies ist beispielsweise bei dem Ausführungsbeispiel gemäß Fig. 3a für die im Bereich der Lichttonspur 20 ausgebildeten Markierungen 14 der Fall. Die einzelnen Markierungen treten nacheinander in dem wiedergegebenen Ton auf. Andererseits ist auch denkbar, dass die Gesamtheit der einzelnen Markierungen gleichzeitig in den wiedergegebenen Informationen auftritt. Dies kann dann der Fall sein, wenn die Markierungen in Bildinformationen enthalten sind (Abschnitt 24 in Figuren 3a und 3b). Es wäre jedoch auch denkbar, dass die einzelnen Markierungen der Markierungsabfolge nacheinander in den Bildinformationen auftreten und damit zeitlich beabstandet wiedergegeben werden. Dies hat den Vorteil, dass die Wahrnehmung der wiedergegebenen Bildinformationen weniger stark beeinflusst ist.

Nachfolgend wird ein Verfahren zum Identifizieren eines der unter Bezugnahme auf die Fign. 1 bis 3a erläuterten Träger näher ausgeführt. Es wird hierbei davon ausgegangen, dass die den Träger individualisierende Abfolge von Markierungen im Bereich der Toninformationen ausgebildet ist und zusammen mit den Toninformationen ausgelesen wird. Weiterhin wird davon ausgegangen, dass die Stelle, an der die Abfolge der Markierungen in den Toninformationen enthalten sind, bekannt ist.

Wurden die Toninformationen aus einem mit den Markierungen versehenen Bereich des Trägers ausgelesen, werden diese Informationen unmittelbar oder nach deren Wiedergabe und akustischen Erfassung einer Spektralanalyse in einem Spektral-Analysator unterzogen. Gleichzeitig wird eine geeignete Tonfilterung durchgeführt. Korrespondierende Referenz-Toninformationen, welche die Markierungen nicht enthalten, werden denselben Aufbereitungsmechanismen unterzogen wie die ausgelesenen Toninformationen. Anschließend werden die derart aufbereiteten Referenz-Toninformationen von den aufbereiteten ausgelesenen Toninformationen subtrahiert.

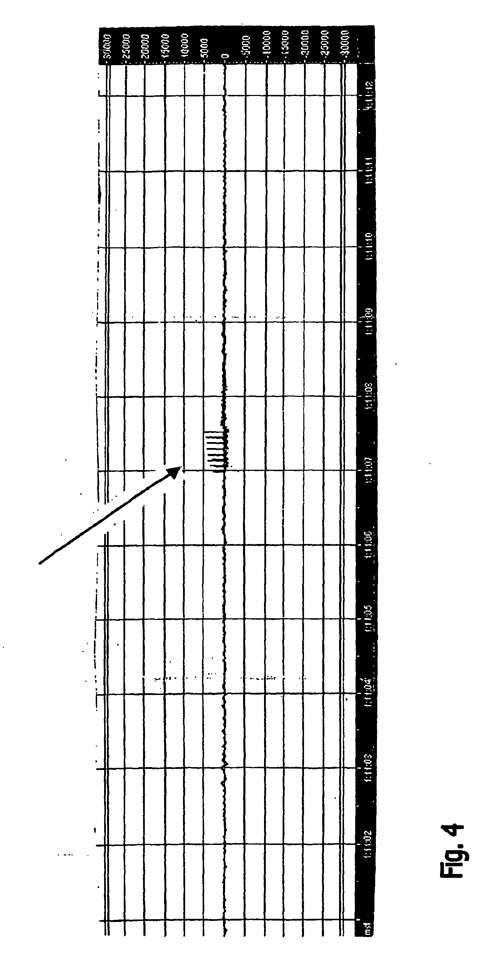

Das Ergebnis der Subtraktion ist in Fig. 4 dargestellt. Deutlich zu erkennen ist die Abfolge einzelner Peaks, welche der in den ausgelesenen Toninformationen enthaltenen Abfolge von Markierungen (im Beispielfall gemäß Fig. 4: 8 aufeinander folgende Markierungen = binär 1 1 1 1 1 1 1 1) entspricht. Die Lage, Höhe und Breite der Peaks (d.h. Tonhöhe/Lautstärke) lassen sich durch Beabstandung, Intensität und Dimensionierung der auf dem Träger ausgebildeten Markierungen gezielt beeinflussen. Zweckmäßigerweise liegt die Lautstärke der Markierungen wenigstens 5 dB und vorzugsweise wenigstens 10 dB über dem Lautstärke-Grundpegel der Referenz-Informationen.

Obwohl die Abfolge von Markierungen in dem ausgelesenen Tonsignal für ein Publikum nicht oder kaum wahrnehmbar ist, kann mittels geeigneter Verfahren die Abfolge von Markierungen somit jederzeit ermittelt und der vorliegende Träger eindeutig identifiziert werden. Eine Besonderheit des Verfahrens ist, dass die einem Ur-Träger einmal zugeordnete Kennzeichnung auch beim Vervielfältigen des Ur-Trägers und insbesondere bei einer Änderung des Datenformats der akustischen Informationen (z.B. analog -> digital) erhalten bleibt.

Die unter Bezugnahme auf Fign. 3a bis 3b erläuterten Ausführungsbeispiele illustrieren die der Erfindung zugrunde liegenden Gedanken, können aber nicht einschränkend interpretiert werden. Insbesondere können auch anderweitige Informationsträger sowie andere Markierungen zum Einsatz gelangen. Auch die Anordnung der zur Wiedergabe bestimmten Informationen auf dem Träger kann abweichend von den Ausführungsbeispielen gewählt werden. So ist es denkbar, die in einer kontinuierlichen Abfolge auf dem Träger enthaltenen Informationen in separaten und voneinander beabstandeten Stellen des Trägers anzuordnen. Mittels geeigneter Auslesemechanismen kann auch in diesem Fall gewährleistet werden, dass die an unterschiedlichen Stellen ausgelesenen kontinuierlichen Informationen tatsächlich auch kontinuierlich wiedergegeben werden. Sofern lediglich einfachere Auslesemechanismen zur Verfügung stehen, ist eine logische Aneinanderreihung der kontinuierlichen Informationsabfolge auf dem Träger jedoch oftmals unumgänglich.

## Patentansprüche

1. Verfahren zum individualisierenden Kennzeichnen eines maschinell auslesbaren Filmträgers (10), der analoge Bild- und Toninformationen beinhaltet, die in einer kontinuierlichen Abfolge auf dem Filmträger (10) enthalten und zur Wiedergabe bestimmt sind, **dadurch gekennzeichnet,**
- **dass** die analogen Toninformationen in einer Lichttonspur (20) enthalten sind; und
- **dass** in der Lichttonspur (20) ein Identifizierungs-Code in Form einer den Filmträger (20) individualisierenden Abfolge örtlich beabstandeter Markierungen (14) ausgebildet wird, der zusammen mit der Lichttonspur (20) auslesbar ist, um die Wiedergabe der in der Lichttonspur (20) enthaltenen Toninformationen in einer den Filmträger (20) individualisierenden Weise zu ändern.

2. Verfahren nach Anspruch 1, **dadurch gekennzeichnet,**
**dass** die Markierungen derart ausgebildet werden, dass jede einzelne der Markierungen die wiedergegebenen Toninformationen beeinflusst.

3. Verfahren nach Anspruch 2, **dadurch gekennzeichnet,**
**dass** eine einzelne der Markierungen die wiedergegebenen Toninformationen um weniger als 250 ms beeinflusst.

4. Verfahren nach einem der Ansprüche 1 bis 3, **dadurch gekennzeichnet,**
**dass** die Markierungen durch mechanisches Einwirken auf den Träger ausgebildet werden.

5. Verfahren nach einem der Ansprüche 1 bis 3, **dadurch gekennzeichnet,**
**dass** die Markierungen durch berührungsloses Einwirken auf den Träger ausgebildet werden.

6. Verfahren nach einem der Ansprüche 1 bis 5, **dadurch gekennzeichnet,**
**dass** dass die Markierungen (14) zeitlich getrennt von den zur Wiedergabe bestimmten Informationen auf dem Träger ausgebildet werden.

7. Verfahren nach einem der Ansprüche 1 bis 6, **dadurch gekennzeichnet,**
**dass** der Identifizierungs-Code ein binärer Code ist.

8. Verfahren nach einem der Ansprüche 1 bis 7, **dadurch gekennzeichnet,**
**dass** die Markierungen (14) durch Änderung von optischen Eigenschaften des Filmträgers (20) ausgebildet werden.

9. Verfahren nach einem der Ansprüche 1 bis 8, **dadurch gekennzeichnet,**
**dass** die Markierungen (14) mittels eines Lasers ausgebildet werden.

10. Maschinell auslesbarer, individualisierter Filmträger (10), der analoge Bild- und Toninformationen beinhaltet, die in einer kontinuierlichen Abfolge auf dem Filmträger (10) enthalten und zur Wiedergabe bestimmt sind, **dadurch gekennzeichnet,**
- **dass** die Toninformationen in einer Lichttonspur (20) enthalten sind; und
- **dass** in der Lichttonspur (20) ein Identifizierungs-Code in Form einer den Filmträger (20) individualisierenden Abfolge örtlich beabstandeter Markierungen (14) ausgebildet ist, der zusammen mit der Lichttonspur (20) auslesbar ist, um die Wiedergabe der in der Lichttonspur (20) enthaltenen Toninformationen in einer den Filmträger (20) individualisierenden Weise zu ändern.

11. Filmträger nach Anspruch 10, **dadurch gekennzeichnet,**
**dass** eine einzelne der Markierungen (14) eine Ausdehnung senkrecht zu einer Ausleserichtung von weniger als ungefähr 500 µm besitzt.

12. Filmträger nach Anspruch 11, **dadurch gekennzeichnet,**
**dass** der Identifizierungs-Code mehrfach und räumlich versetzt auf dem Filmträger (20) ausgebildet ist.

13. Filmträger nach einem der Ansprüche 10 bis 12, **dadurch gekennzeichnet,**
**dass** die Markierungen (14) derart ausgebildet sind, dass die Wahrnehmung der wiedergegebenen Informationen seitens eines Publikums nicht oder nur kaum beeinflusst ist.

14. Filmträger nach einem der Ansprüche 10 bis 13, **dadurch gekennzeichnet,**
**dass** sich eine einzelne der Markierungen (14) zumindest senkrecht zu der Ausleserichtung (A) erstreckt.

15. Gekennzeichneter Filmträger enthaltend zur Wiedergabe bestimmte Informationen, erhalten durch Kopieren eines Filmträgers (10) nach einem der Ansprüche 10 bis 14.

16. Verfahren zum Identifizieren eines Filmträgers (10) nach einem der Ansprüche 10 bis 15, umfassend
- maschinelles Auslesen der auf dem Filmträger (20) enthaltenen und zur Wiedergabe bestimmten Informationen in einem mit den Markierungen (14) versehenen Bereich des Filmträgers (20);
- Auswerten der ausgelesenen Informationen zum Ermitteln der Abfolge von Markierungen (14); und
- Identifizieren des Filmträgers (20) auf der Grundlage der ermittelten Abfolge von Markierungen (14).

17. Verfahren nach Anspruch 16, **dadurch gekennzeichnet,**
**dass** das Ermitteln der Abfolge der Markierungen eine Bild- und/oder Spektral-Analyse umfasst.

18. Verfahren nach Anspruch 16 oder 17 , ferner enthaltend
- Bereithalten von Referenz-Informationen; und
- Vergleichen der vom Filmträger (20) ausgelesenen und zur Wiedergabe bestimmten Informationen mit den Referenz-Informationen zur Identifizierung der Markierungen (14).

## Claims

1. A method for the individualized marking of a machine-readable film medium (10) containing analogue image and sound information which is included in a continuous sequence on the film medium (10) and is intended for reproduction, **characterized in**
- **that** the analogue sound information is contained in an optical sound track (20); and
- **that** in the optical sound track (20) an identification code in the form of a sequence of markings (14) which individualizes the film medium (10) is formed which can be read out together with the optical sound track (20) in order to change the reproduction of the sound information contained in the optical sound track (20) in a manner individualizing the film medium (10).

2. The method according to claim 1, **characterized in that** the markings are formed in such a way that each one of the markings influences the reproduced sound information.

3. The method according to claim 2, **characterized in that** a single one of the markings influences the reproduced sound information by less than 250 ms.

4. The method according to one of claims 1 to 3, **characterized in that** the markings are formed by mechanical operation on the medium.

5. The method according to one of claims 1 to 3, **characterized in that** the markings are formed by contact-free operation on the medium.

6. The method according to one of claims 1 to 5, **characterized in that** the markings (14) are formed on the medium separately in time from the information intended for reproduction.

7. The method according to claims 1 to 6, **characterized in that** the identification code is a binary code.

8. The method according to one of claims 1 to 7, **characterized in that** the markings (14) are formed by changing optical properties of the film medium (10).

9. The method according to one of claims 1 to 8, **characterized in that** the markings (14) are formed by means of a laser.

10. A machine readable individualized film medium (10) containing analogue image and sound information which is included in a continuous sequence on the film medium (10) and is intended for reproduction, **characterized in**
- **that** the sound information is contained in an optical sound track (20); and
- **that** in the optical sound track (20) an identification code in the form of a sequence of markings (14) which individualizes the film medium (10) is formed which can be read out together with the optical sound track (20) in order to change the reproduction of the sound information contained in the optical sound track (20) in a manner individualizing the film medium (10).

11. The film medium according to claim 10, **characterized in that** a single one of the markings (14) has an extent, perpendicularly to a read-out direction, of less than about 500 µm.

12. The film medium according to claim 11, **characterized in that** the identification code is repeatedly and in spatially offset manner formed on the film medium (10).

13. The film medium according to one of claims 10 to 12, **characterized in that** the markings (14) are formed in such a way that there is little or no effect on the perception of the reproduced information by an audience.

14. The film medium according to one of claims 10 to 13, **characterized in that** a single one of the markings (14) at least extends perpendicularly to the read-out direction (A).

15. A **characterized** medium containing information intended for reproduction, obtained by copying a film medium (10) according to one of claims 1 to 14.

16. A method for identifying a film medium (10) according to one of claims 1 to 15, comprising the steps of
- mechanically reading out the information which is contained on the film medium (10) and intended for reproduction in an area of the film medium (10) provided with the markings (14);
- evaluating the read-out information to determine the sequence of markings (14); and
- identifying the film medium (10) on the basis of the determined sequence of markings (14).

17. The method according to claim 16, **characterized in that** the determination of the sequence of markings includes an image and/or spectrum analysis.

18. The method according to claim 16 or 17, further comprising the steps of:
- providing reference information; and
- comparing the information which is read out from the film medium (10) and intended for reproduction with the reference information to identify the markings (14).

## Revendications

1. Procédé permettant le marquage d'individualisation d'un support filmique (10) lisible par machine contenant des informations optiques et sonores analogiques qui sont contenues dans une suite continue sur le support filmique (10) et sont destinées à être reproduites, **caractérisé en ce que**
- les informations sonores analogiques sont contenues sur une piste sonore optique (20) ; et **en ce que**
- un code d'identification est formé sur la piste sonore optique (20) sous la forme d'une suite de repères (14) espacés servant à individualiser le support filmique (20), lequel code peut être lu en même temps que la piste sonore optique (20) pour modifier d'une manière qui individualisera le support filmique (20) la reproduction des informations sonores contenues sur la piste sonore optique (20).

2. Procédé selon la revendication 1, **caractérisé en ce que**
les repères sont formés de telle sorte que chacun des repères influence les informations sonores reproduites.

3. Procédé selon la revendication 2, **caractérisé en ce que**
un des repères influence de moins de 250 ms les informations sonores reproduites.

4. Procédé selon l'une des revendications 1 à 3, **caractérisé en ce que**
les repères sont formés sur le support à l'aide d'un moyen agissant mécaniquement sur ce dernier.

5. Procédé selon l'une des revendications 1 à 3, **caractérisé en ce que**
les repères sont formés sur le support à l'aide d'un moyen agissant à distance sur ce dernier.

6. Procédé selon l'une des revendications 1 à 5, **caractérisé en ce que**
la formation des repères (14) sur le support et l'application sur le support des informations destinées à être reproduites sont deux opérations temporellement séparées.

7. Procédé selon l'une des revendications 1 à 6, **caractérisé en ce que**
le code d'identification est un code binaire.

8. Procédé selon l'une des revendications 1 à 7, **caractérisé en ce que**
les repères (14) sont formés par modification des propriétés optiques du support filmique (20).

9. Procédé selon l'une des revendications 1 à 8, **caractérisé en ce que**
les repères (14) sont formés au moyen d'un laser.

10. Support filmique (10) individualisé et lisible par machine contenant des informations optiques et sonores analogiques qui sont contenues dans une suite continue sur le support filmique (10) et sont destinées à être reproduites, **caractérisé en ce que**
- les informations sonores analogiques sont contenues sur une piste sonore optique (20) ; et **en ce que**
- un code d'identification est formé sur la piste sonore optique (20) sous la forme d'une suite de repères (14) espacés servant à individualiser le support filmique (20), lequel code peut être lu en même temps que la piste sonore optique (20) pour modifier d'une manière qui individualisera le support filmique (20) la reproduction des informations sonores contenues sur la piste sonore optique (20).

11. Support filmique selon la revendication 10, **caractérisé en ce que**
un des repères (14) présente perpendiculairement à un sens de lecture une étendue inférieure à environ 500 µm.

12. Support filmique selon la revendication 11, **caractérisé en ce que**
le code d'identification est formé plusieurs fois et formé décalé dans l'espace sur le support filmique (20).

13. Support filmique selon l'une des revendications 10 à 12, **caractérisé en ce que**
les repères (14) sont formés de telle sorte que la perception par un public des informations reproduites n'est pas ou n'est que très peu influencée.

14. Support filmique selon l'une des revendications 10 à 13, **caractérisé en ce que**
un des repères (14) s'étend pour le moins perpendiculairement au sens de lecture (A).

15. Support marqué qui comprend des informations destinées à être reproduites et a été obtenu par copie d'un support filmique (10) selon l'une des revendications 10 à 14.

16. Procédé pour identifier un support filmique (10) selon l'une des revendications 10 à 15, comprenant
- la lecture par machine des informations contenues sur le support filmique (20) dans une zone du support filmique (20) munie desdits repères (14) et destinées à être reproduites ;
- l'évaluation des informations lues pour l'identification de la suite de repères (14) ;
- l'identification du support filmique (20) sur la base de la suite de repères identifiée (14).

17. Procédé selon la revendication 16, **caractérisé en ce que**
l'identification de la suite des repères comprend une analyse optique et/ou une analyse spectrale.

18. Procédé selon la revendication 16 ou 17, comprenant en outre
- la mise à disposition d'informations de référence ; et
- la comparaison des informations lues sur le support filmique (20) et destinées à être reproduites avec les informations de référence en vue d'identifier les repères (14).
